# Europäisches Patentamt
# European Patent Office
# Office européen des brevets

(19)

(11) Veröffentlichungsnummer: **0 117 907**
**B1**

(12) ## EUROPÄISCHE PATENTSCHRIFT

(45) Veröffentlichungstag der Patentschrift:
**20.07.88**

(51) Int. Cl.⁴: **G 07 F 7/10, H 04 L 9/00**

(21) Anmeldenummer: **83111877.3**

(22) Anmeldetag: **28.11.83**

(54) **Verfahren zur Überprüfung elektronischer Daten sowie Modul für das Verfahren.**

(30) Priorität: **07.02.83 AT 417/83**

(43) Veröffentlichungstag der Anmeldung:
**12.09.84 Patentblatt 84/37**

(45) Bekanntmachung des Hinweises auf die Patenterteilung:
**20.07.88 Patentblatt 88/29**

(84) Benannte Vertragsstaaten:
**AT BE CH DE FR GB IT LI LU NL SE**

(56) Entgegenhaltungen:
**EP-A-0 063 794**
**WO-A-81/02655**
**GB-A-2 060 233**
**US-A-4 218 738**
**US-A-4 259 720**

**IBM TECHNICAL DISCLOSURE BULLETIN, Band 25,
Nr. 5, Oktober 1982, Seiten 2358-2360, New York, US;
R.E. LENNON u.a.: "Authentication with stored KP
and dynamic PAC"
IBM TECHNICAL DISCLOSURE BULLETIN, Band 24,
Nr. 12, Mai 1982, Seiten 6504-6509, New York, US;
R.E. LENNON u.a.: "Personal verification and
message authentication using personal keys"**

(73) Patentinhaber: **GABE Geldausgabeautomaten-
Service Gesellschaft m.b.H, Hintere
Zollamtsstrasse 17, A-1031 Wien (AT)**

(72) Erfinder: **Solarovszky, Walter, Engelsberggasse 4,
A-1030 Wien (AT)**
Erfinder: **Dillinger, Klaus, Dipl.- Ing., Hintere
Zollamtsstrasse 17, A-1031 Wien (AT)**

(74) Vertreter: **Puchberger, Rolf, Dipl. Ing.,
Patentanwälte, Dipl. Ing. Georg Puchberger
Dipl. Ing. Rolf Puchberger Dipl. Ing. Peter
Puchberger Singerstrasse 13 Postfach 55, A-1010
Wien (AT)**

2

**Beschreibung**

Die Erfindung betrifft ein Verfahren zur Identifikation von Terminalbenutzern und zur Überprüfung der Echtheit das Ursprunges und Inhaltes von elektronisch übermittelten Daten sowie der Identität des Absenders unter Verwendung kryptografischer Methoden.

Systeme des elektronischen Zahlungsverkehrs bewältigen schon heute einen beachtlichen Anteil des Zahlungsvolumens; ihre Bedeutung wird noch weiter steigen. Sei es die scheck- und bargeldlose Bezahlung von Einkäufen am Point of Sale, die Barbehebung am Geldausgabeautomaten, der Ersatz von Scheck und Unterschrift am Bankschalter durch Karte und Code, die Aufgabe einer Überweisung am Bildschirmtextgerät zu Hause (Home-banking), alle diese Transaktionen können nur dann gesichert abgewickelt werden, wenn die eindeutige Feststellung der Identität des Kunden sowie die Verifikation des korrekten Ursprunges und unverfälschten Inhaltes der Transaktionsdaten (auch als Meldungsauthentisierung bezeichnet) möglich sind.

Im Zusammenhang mit dem Aufbau derartiger Systeme ergeben sich im wesentlichen vier Probleme:

1.  Datenschutz, darunter versteht man die Verhinderung des unberechtigten Zugriffes zu sensitiven Informationen,
2.  Transaktionsauthentizität, dies ist die Feststellung, ob die Transaktionsanforderung tatsächlich von einem authorisierten Terminal stammt,
3.  Benutzeridentität, das ist die Feststellung, ob eine Verfügungsberechtigung des Benutzers besteht, und schließlich
4.  Sicherung der geheimen Systemkomponenten, dies sind die kryptografischen Schlüssel und Algorithmen im Terminal einerseits und im Sicherungsmodul andererseits, die vor jedem unbefugten Zugriff geschützt werden müssen.

Die ersten drei der genannten Probleme können mit Hilfe kryptrografischer Methoden gelöst werden, wohingegen das vierte Problem einige technische Maßnahmen erfordert.

Aus IBM-Technical Disclosure Bulletin, Band 25, Nr. 5, Oktober 1982, ist bereits ein Verfahren zur Überprüfung der Benutzer bekannt, bei dem auf einer Magnetstreifenkarte eine Benutzeridentifikationsnummer und ein persönlicher Schlüssel enthalten sind. Unter Verwendung einer geheimen persönlichen Identifikationsnummer und der Magnetstreifenkarte wird eine Transaktionsanforderung gebildet und zusammen mit einem durch Verschlüsselung der Benutzeridentifikation mit dem persönlichen Schlüssel gebildeten Authentizitätsparameter zu einer Überbrückungsstufe vertragen, dort entschlüsselt und mit einem Referenzauthentizitätsparameter verglichen. Da hier nur eine kryptografische Entschlüsselung gegeben ist, ist kein ausreichender Schutz zur Identifikation von Terminalbenutzern und zur Überprüfung der Echtheit des Ursprunges und Inhaltes der elektronisch übermittelten Daten gegeben.

Aus EP-A2-0 063 794 sind ein Gerät zur Identitätsprüfung und ein Verfahren zur kryptografischen Identitätsüberprüfung bekannt. Hier werden die von einer persönlichen Datenkartei abgelesenen Merkmale und ein Schlüssel verschlüsselt, ein zeitweiliger Schlüssel und eine Nachrichtennummer erzeugt, dann die persönlichen Merkmalsdaten, das erste Kryptogramm, der zeitweilige Schlüssel und die Nachrichtennummer verschlüsselt und diese Nachricht einer getrennt angeordneten Sicherheitsstation zugeführt. Die Sicherheitsstation entschlüsselt die empfangene Nachricht mit ihrem geheimen Schlüssel, vergleicht die Daten mit Bezugsdaten und gibt dann bei positivem Vergleich eine Nachricht an das Terminal zurück.

Gemäß US-A-4 259 720 ist getrennt von der Verarbeitungseinheit ein Sicherheitsmodul vorgesehen, der mit einem Masterschlüssel versehen ist. Dieser Schlüssel dient zum Verschlüsseln der Schlüssel der Terminals und auch zum Verschlüsseln der Benutzeridentifikationsnummer, wobei alle diese Daten in verschlüsselter Form in einem ungesicherten Speicher gespeichert werden können. Da jedoch der Masterschlüssel dem Sicherheitsmodul nicht entnommen werden kann, können die verschlüsselten Daten nicht entschlüsselt werden und es soll so eine Sicherheit gegeben sein. Bei einer Anforderung werden dem Sicherheitsmodul die verschlüsselte Benutzeridentifikationsnummer und die verschlüsselte Terminalnummer zugeführt, wo diese unter Verwendung des Masterschlüssels entschlüsselt werden, wobei gleichzeitig der Terminalschlüssel zur Entschlüsselung der Benutzeridentifikation verwendet wird. Die entschlüsselten Daten werden dann im Sicherheitsmodul verglichen und bei positivem Vergleich wird dann eine Authentizitätsbestätigung abgegeben.

Die WO-A-81/02655 betrifft ein System zur Überprüfung von Benutzern bei Onlinenetzen. Auch hier initiiert eine Magnetstreifenkarte und eine geheime persönliche Identifikationsnummer das Verfahren. Die persönliche Identifikationsnummer wird mehrmals verschlüsselt und alle Daten werden einer Verarbeitungseinheit zugeführt, wo die empfangene Nachricht entschlüsselt wird und ein Arbeitsschlüssel gebildet wird. Gleichzeitig wird auch ein Vergleich der entschlüsselten Daten durchgeführt, wobei dann eine Transaktionsanforderung erzeugt und mit dem Arbeitsschlüssel verschlüsselt wird. Diese verschlüsselte Transaktionsanforderung wird dem Terminal zugeführt, wo dann wiederum eine Entschlüsselung stattfindet.

Es ist Aufgabe der Erfindung die genannten vier Probleme auf einfache Weise und dennoch mit Zuverlässigkeit zu beseitigen.

Zur Lösung der erfinderischen Aufgabe wird das Verfahren gemäß Anspruch 1 vorgeschlagen.

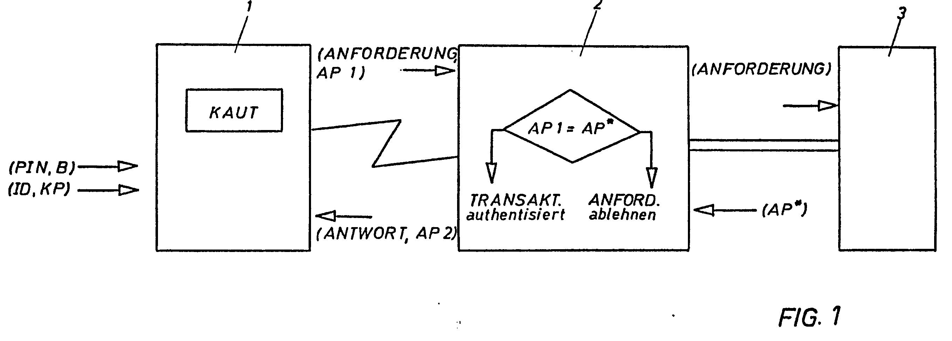

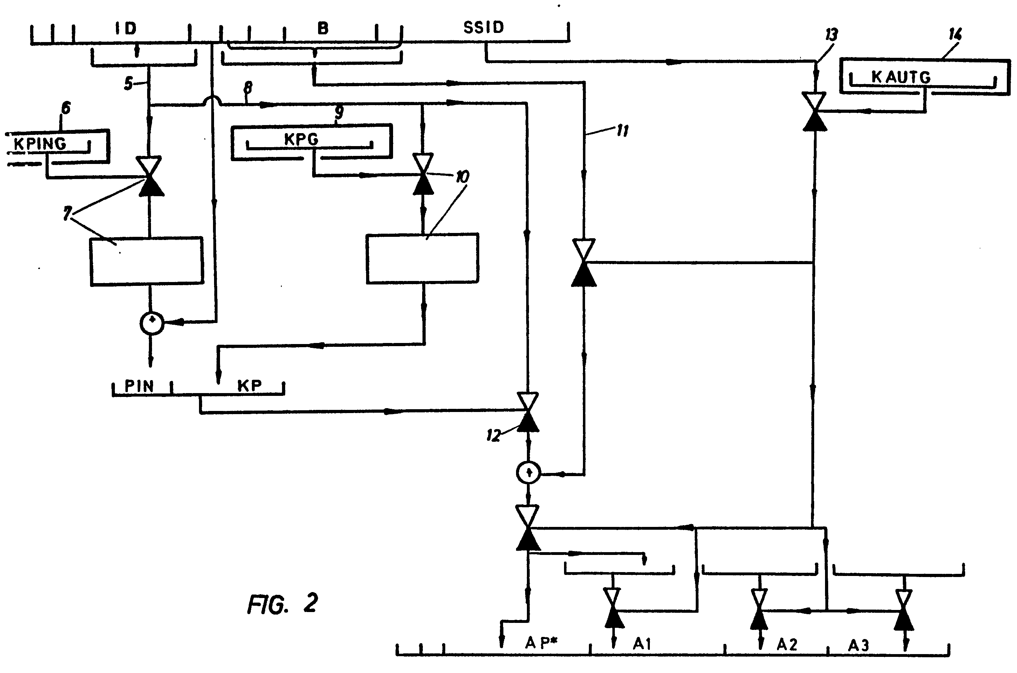

Die Erfindung wird nun anhand der Zeichnungen näher beschrieben. Fig. 1 zeigt den Ablauf einer typischen Transaktion im elektronischen Zahlungsverkehr. Fig. 2 ist ein Schema des Aufbaues des Moduls gemäß der vorliegenden Erfindung.

Anhand der Fig. 1 soll nun der Ablauf einer typischen Transaktion im elektronischen Zahlungsverkehr dargelegt werden. Der Kunde ist im Besitz einer Magnetstreifenkarte und eines dazugehörigen, von der Kartennummer abhängigen vierstelligen persönlichen Codes, der persönlichen Identifikationsnummer PIN. Auf dem Magnetstreifen der Karte sind unter anderem die Kartennummer, d. h. Benutzeridentifikation ID, und ein von ihr abhängiger kryptografischer Schlüssel, der sogenannte persönliche Schlüssel KP, gespeichert.

Zu Beginn der Transaktion liest nun das Terminal 1 die Kartennummer ID und den persönlichen Schlüssel KP von der Karte und der Benutzer gibt die persönliche Identifikationsnummer PIN und Betrag B ein. Das Terminal 1, das über einen geheimenkryptografischen Schlüssel, den sogenannten Authentizitätsschlüssel KAUT, verfügt, setzt eine aus den eingegebenen Daten gebildete Transaktionsanforderung, die durch den acht Byte langen Authentisierungsparameter AP1 abgesichert ist, an den Computer 2 ab. Der Authentizitätsschlüssel KAUT wird mit Hilfe eines weiteren kryptografischen Schlüssels KAUTG aus der Subsystemidentifikation SSID generiert und ist somit von Subsystem zu Subsystem verschieden. Der Authentisierungsparameter AP1 ist eine Funktion der von Kunden eingegebenen Daten (ID, KP, PIN, B), einer zeitabhängigen Größe (z. B. einer eindeutigen Transaktionsnummer) und des Authentizitätsschlüssels KAUT.

Der Computer 2 leitet den Datenteil der Anforderung, erweitert um die Nummer des anfordernden Subsystems an den lokal angeschlossenen, zentralen PIN-Kontroll-Modul 3 weiter. Der Modul 3 ermittelt mittels der ihm zur Verfügung stehenden kryptografischen Schlüssel aus den Anforderungsdaten und der Subsystemidentikation SSID einen Referenz-Authentisierungsparameter AP*, der an den Computer 2 zurückgeliefert wird.

Der Computer 2 vergleicht nun die Transaktionsanforderungsnachricht AP1 mit dem vom Modul 3 ermittelten Referenzauthensisierungsparameter AP*: bei negativem Vergleichsergebnis (d. h. AP ≠ AP*) war entweder die am Terminal eingegebene PIN nicht korrekt oder die Transaktionsanforderung ist nicht authentisch (d. h. die Daten wurden auf dem Übertragungsweg verändert). Die Autorisierung einer solchen Transaktion wird vom System daher abgelehnt.

Im anderen Fall, falls AP = AP*, wurde eine korrekte PIN eingegeben, die Transaktionsdaten sind authentisch, und die Transaktion kann - bei Erfüllung der sonstigen Voraussetzungen (Karte nicht gesperrt, Limit nicht überzogen) - autorisiert werden.

Der Modul 3 spielt bei dieser Abwicklung eine zweifache Rolle: einerseits ist der Modul 3 in der Lage, kryptografische Schlüssel sicher zu speichern, und daher ohne Gefahr der Kompromittierung der Schlüssel einen Referenz-Authentisierungsparameter AP* zu berechnen, andererseits wird eine Autorisierungsstelle (das ist ein Rechenzentrum, das EFT-Terminals betreibt) durch die bloße Installation eines Moduls in die Lage versetzt, Transaktionen gesichert abzuwickeln, ohne selbst kryptografische Schlüssel generieren oder verwalten bzw. Sicherheitsmaßnahmen, die über eine physische Absicherung des Moduls vor Diebstahl oder fremdem Zugriff hinausgehen, ergreifen zu müssen.

Fig. 2 zeigt das Schema des erfindungsgemäßen Moduls. Dieser Modul besitzt einen für die Benutzeridentifikation bestimmten Selektor, an dem eine Übermittlungsleitung 5 anschließt. Diese Übermittlungsleitung ist mit einem Speicher 6 für die Sicherung des erforderlichen Schlüssels verbunden und an einen kryptografischen Schaltkreis 7 angeschlossen. Eine Zweigleitung 8 dieser Übermittlungsleitung 5 ist mit einem weiteren Speicher 9 für die Sicherung eines weiteren Schlüssels und mit einem weiteren kryptografischen Schaltkreis 10 verbunden.

Die auf der Übermittlungsleitung 5 geführte Benutzeridentifikation ID wird mit dem im Speicher 6 befindlichen Schlüssel KPING verschlüsselt und durch Ziffernselektion und Additionsmodule 1 des in der Transaktionsanforderung enthaltenen Offsetwertes 0 in die persönliche Identifikationsnummer PIN umgewandelt. Die aus der Zweigleitung 8 geführte Information wird durch Verschlüsselung mit dem im Speicher 9 befindlichen Schlüssel KPG und anschließender Ziffernselektion in den persönlichen Schlüssel KP übergeführt. Die Benutzeridentifikation ID oder eine Ableitung davon wird dann mit einem weiteren kryptografischen Schaltkreis 12 verbunden, der auch eine Übertragungsleitung für die persönliche Identifikationsnummer PIN und den persönlichen Schlüssel KP zugeführt sind, so daß hier die Identifikationsnummer durch diese beiden Daten verschlüsselt wird. Eine Übertragungsleitung 13 ist über einen kryptografischen Schaltkreis mit dem Speicher 14 für den Authentizitätsschlüssel KAUTG verbunden, über den die Subsystemidentifikation entschlüsselt wird, so daß der Authentizitätsschlüssel KAUT entsteht, wobei aus PIN, KP und KAUT und weiteren Daten der Transaktionsanforderung ein Referenzauthentisierungsparameter AP* und die Transaktionsantwortnachricht A1, A2, A3 gebildet werden. Eine Transaktionsantwortnachricht A1, A2 oder A3 wird vom Computer 2 an den Terminal zurückgesendet, und zwar:

A1 für positive Autorisierung
A1 für abgelehnte Autorisierung
A3 wenn ein falscher PIN eingegeben wurde.

Die Verifizierung der Transaktionsauthentizität wird vom Computer durch Vergleich zwischen der Transaktionsanforderungsnachricht AP1 und dem Referenzauthentisierungsparameter AP* und durch Überprüfung auf Plausibilität vorgenommen.

Ist AP1 = AP*, kann - mit sehr hoher Wahrscheinlichkeit - darauf geschlossen werden, daß

1. die Transaktionsanforderung von einem autorisierten Terminal abgesetzt wurde (andernfalls hätte der Modul die korrekte Beziehung der Subsystemidentifikation zum Authentizitätsschlüssel KAUT nicht herstellen können) und

2. die sensitiven Datenfelder der Transaktionsanforderung auf dem Übertragungsweg nicht verfälscht wurden (andernfalls hätte sich die Verschlüsselung manipulierter sensitiver Informationen mit einem korrekten Authentizitätsschlüssel KAUT in einer Veränderung des AP* ausgewirkt).

Falls die Transaktionsnummer nicht plausibel ist, d. h. nicht in die aufsteigende Reihenfolge für das betreffende Subsystem paßt, handelt es sich um eine ursprünglich korrekte Transaktionsanforderung, die jedoch zu einem späteren Zeitpunkt von einem Angreifer als Duplikat ins System eingespielt wurde.

Andererseits, falls AP* ≠ AP*, kann - eine korrekte PIN-Eingabe am Terminal vorausgesetzt - mit Sicherheit darauf geschlossen werden, daß entweder der Absender, sensitive Datenfelder oder die Transaktionsnummer der Transaktionsanforderung manipuliert wurden.

Die Verifizierung der Authentizität der Transaktionsantwort vom Computer an das Subsystem wird vom angeschlossenen Terminal durch Vergleich des von ihm abgesetzten AP1 mit den in der Transaktionsantwort enthaltenen, verschlüsselten ersten sieben Bytes von AP* bewerkstelligt.

Falls AP1 = AP*, ist die einlangende Antwort authentisch (d. h. sie stammt von einem autorisierten Hostrechner, wurde auf dem Übertragungsweg nicht verändert, und ist auch kein Duplikat), denn einerseits war sie mit dem korrekten KAUT, der nur vom Modul reproduziert werden konnte, verschlüsselt, andererseits wurde der nur für diese Transaktionsnummer, diesen Betrag und diese Karte gültige AP* zurückgeliefert.

Die Verifizierung der Benutzeridentität wird von der Host-Applikation - ebenso wie die Transaktionauthentisierung - durch Vergleich des in der Transaktionsanforderung enthaltenen AP1 mit dem vom Modul gelieferten Referenzwert AP* durchgeführt. Dabei können folgende Schlüsse gezogen werden:

1. AP1 = AP*
   Am Terminal wurde ein korrektes Tripel (ID, KP, PIN) eingegeben; andernfalls hätte der Modul einen anderen KP und eine andere PIN aus ID abgeleitet, was in einer Veränderung von AP* seinen Niederschlag gefunden hätte.

2. AP1 ≠ AP*
   Authentizität der Transaktionsanforderung vorausgesetzt, kann in diesem Fall zwingend geschlossen werden, daß ein unkorrektes Tripel (ID, KP, PIN) eingegeben wurde.

Da sich keine vertraulichen Schlüssel oder sicherheitskritischen Programme außerhalb des Moduls befinden, kann sich eine Sicherung derselben auf eine hard- und softwaregestützte Abwehr von Angriffen gegen den Modul beschränken.

Der Modul ist ein unabhängiger Hardwaremodul, der an einen Rechner angeschlossen werden kann. Er hat die Aufgabe, aus den Input-Daten Kartendaten und Betrag mit Hilfe der ihm zur Verfügung stehenden vertraulichen Schlüssel den Authentisierungsparameter zu berechnen und dem Rechner zu Vergleichszwecken zur Verfügung zu stellen.

Einbringen der geheimen Schlüssel:
In den Modul sind folgende Schlüssel einzubringen:
KPING   PIN-Generierungsschlüssel (zur Ableitung von PIN aus ID)
KPG     KP-Generierungsschlüssel (zur Ableitung von KP aus ID)
KAUTG   KAUT-Generierungsschlüssel (zur Ableitung von KAUT aus Subsystemidentifikation SSID).

Sämtliche Schlüssel werden in einen batteriegepufferten Speicher gestellt.
Sicherung der kryptografischen Schlüssel
Es ist sicherzustellen, daß nur die CPU des ZPKM auf die Schlüssel zugreifen kann. Neben der Unterbrechung der Stromzufuhr bei Öffnen des Gehäuses ist dies durch Eingießen der CPU und der Speicher-IC's oder andere geeignete Maßnahmen sicherzustellen.

**Patentansprüche**

1. Verfahren zur Identifikation von Terminalbenutzern und zur Überprüfung der Echtheit des Ursprunges und Inhaltes von elektronisch übermittelten Daten in Online-Netzen unter Verwendung kryptografischer Methoden, bei dem eine Vielzahl von

Identifikationsterminals (1) mit Hilfe von öffentlichen oder privaten Leitungseinrichtungen an einen zentralen Computer (2) angeschlossen ist, wobei jedes Identifikationsterminal eine eindeutig zugeordnete Subsystemidentifikation (SSID) und einen eindeutig zugeordneten kryptografischen Schlüssel, den sogenannten Authentizitätsschlüssel (KAUT) enthält, bei welchem System weiters alle zulässigen Systembenutzer mit einer persönlichen Identifikationsnummer (PIN) und Magnetstreifenkarten, die eine eindeutig zugeordnete Benutzeridentifikation (ID) enthalten, ausgestattet sind, wobei die persönliche identifikationsnummer (PIN) mit der Benutzeridentifikation (ID) in einem funktionalen Zusammenhang steht, bei welchem System weiters die Transaktion am Identifikationsterminal (1) vom Systembenutzer mit Hilfe seiner Magnetstreifenkarte und seiner geheimen persönlichen Identifikationsnummer (PIN) initiiert wird und eine Transaktionsanforderungsnachricht (AP1) vom Identifikationsterminal gebildet und mit Hilfe kryptografischer Methoden abgesichert und an den Computer (2) übertragen wird, wonach der Computer (2) eine mit kryptografischen Methoden abgesicherte Transaktionsantwortnachricht (A1, A2, A3) zum Identifikationsterminal (1) überträgt, und bei dem der Magnetstreifen der erwähnten Magnetstreifenkarte außer den für die Transaktionsabwicklung nötigen Daten einen kryptografischen Schlüssel, den sogenannten persönlichen Schlüssel (KP) enthält und dieser, ebenso wie die persönliche Identifikationsnummer (PIN), mit der Benutzeridentifikation (ID) in einem funktionalen Zusammenhang steht, wobei der Authentizitätsschlüssl (KAUT) in funktionalem Zusammenhang mit der Subsystemidentifikation (SSID) steht, und zur Berechnung der erwähnten Funktionen ein Hardware-Sicherheitsmodul (3) vorgesehen ist, wobei im Modul (3) zur Rekonstruktion der persönlichen Identifikationsnummer (PIN) bzw. des persönlichen Schlüssels (KP) aus der Benutzeridentifikation (ID) je ein Schlüssel (KPING) bzw. (KPG) und zur Rekonstruktion des Authentizitätsschlüssels (KAUT) aus der Subsystemidentifikation (SSID) ein Schlüssel (KAUTG) gespeichert ist, wobei aus den rekonstruierten Größen ein Referenzauthentisierungsparameter (AP*) gebildet und ein Vergleich zwischen der Transaktionsanforderungsnachricht (AP1) und dem Referenzauthentisierungsparameter (AP*) zur Bildung von Autorisierungsparametern durchgeführt wird.

2. Verfahren nach Anspruch 1, dadurch gekennzeichnet, daß die auf einer Übermittlungsleitung (5, 8) geführte Benutzeridentifikation (ID) mit den in einem Speicher (6) bzw. Speicher (9) abgespeicherten Schlüsseln (KPING, KPG) verschlüsselt und in die persönliche Identifikationsnummer (PIN) bzw. in den persönlichen Schlüssel (KP) übergeführt wird, worauf dann die Benutzeridentifikation (ID) oder eine Ableitung davon mit einem weiteren kryptografischen Schaltkreis (12) verbunden wird, dem auch eine Übertragungsleitung für die persönliche Identifikationsnummer (PIN) und den persönlichen Schlüssel (KP) zugeführt ist, und daß eine Übertragungsleitung (13) über einen weiteren kryptografischen Schaltkreis mit dem Speicher (14) für den Authentizitätsschlüssel (KAUTG) verbunden ist, mit dem aus der Subsystemidentifikation (SSID) der Authentizitätsschlüssel (KAUT) entsteht, wobei aus der Identifikationsnummer (PIN), dem persönlichen Schlüssel (KP), dem Authentizitätsschlüssel (KAUT) und weiteren Daten der Transaktionen ein Referenzauthentisierungsparameter (AP*) und die Transaktionsantwortnachricht (A1, A2, A3) gebildet werden.

3. Verfahren nach Anspruch 1 oder 2, dadurch gekennzeichnet, daß

a) eine Transaktionsanforderungsnachricht (AP1) am Terminal (1), basierend auf den vom Benutzer zur Verfügung gestellten Daten, sowie Datum, Uhrzeit, Transaktionsfolgenummer und Subsystemidentifikation erzeugt wird,

b) die Transaktionsanforderungsnachricht (AP1) verschlüsselt wird, wobei als Schlüssel die logische Summe von persönlichem Schlüssel (KP) und persönlicher Identifikationsnummer (PIN) verwendet wird,

c) die letzten 8-Byte-Blocks des Ergebnisses von (b) verschlüsselt werden, wobei als Schlüssel der Authentizitätsschlüssel (KAUT) des Terminals verwendet wird,

d) an die gemäß (a) erzeugte, unverschlüsselte Transaktionsanforderungsnachricht (AP1) das gemäß (c) erhaltene Ergebnis angehängt wird, der entstehende Datensatz zum Computer (2) übertragen wird,

e) der Computer den einlangenden Datensatz an den angeschlossenen Hardware-Sicherheitsmodul (3) übergibt,

f) der Hardware-Sicherheitsmodul (3) dem Datensatz die Benutzeridentifikation (ID) entnimmt und daraus den persönlichen Schlüssel (KP) und die persönliche Identifikationsnummer (PIN) berechnet,

g) der Hardware-Sicherheitsmodul (3) dem Datensatz die Subsystemidentifikation (SSID) entnimmt und daraus den Authentizitätsschlüssel (KAUT) berechnet,

h) der Hardware-Sicherheitsmodul (3) die Transaktionsanforderungsnachricht (AP1) verschlüsselt, wobei als Schlüssel die logische Summe des berechneten persönlichen Schlüssels (KP) und der berechneten persönlichen Identifikationsnummer (PIN) verwendet wird,

i) der Hardware-Sicherheitsmodul (3) den letzten 8-Byte-Block des gemäß (h) erhaltenen Ergebnisses verschlüsselt, wobei als Schlüssel der berechnete Authentizitätsschlüssel (KAUT) verwendet wird, und das Ergebnis an den Computer (2) (= Referenzauthentisierungsparameter) überträgt,

j) der Hardware-Sicherheitsmodul (3) den letzten 8-Byte-Block des gemäß (h) erhaltenen Ergebnisses entschlüsselt, wobei als Schlüssel der berechnete Authentizitätsschlüssel (KAUT) verwendet wird, und das Ergebnis an den Computer (2) überträgt,

k) der Computer (2) den vom Hardware-Sicherheitsmodul (3) empfangenen Referenzauthentisierungsparamenter (AP*) mit den letzten 8-Byte der empfangenen Transaktionsanforderungsnachricht (AP1) vergleicht, bei Gleichheit und Erfüllung der sonstigen, durch die Applikation definierten Autorisierungserfordernisse der zweite, vom Sicherheitsmodul empfangene Wert als Transaktionsantwortnachricht (A1, A2, A3) an das Terminal gesendet wird, bei Ungleichheit oder Nichterfüllung eines durch die Applikation definierten Autorisierungserfordernisses eine Zufallszahl als Transaktionsantwortnachricht an das Terminal (1) gesendet wird,

l) das Terminal (1) den letzten 8-Byte-Block des gemäß (b) erhaltenen Ergebnisses entschlüsselt, wobei als Schlüssel der Authentizitätsschlüssel (KAUT) verwendet wird, und das Ergebnis mit der empfangenen Transaktionsantwortnachricht (A1, A2, A3) vergleicht,

m) bei Gleichheit die Transaktion als autorisiert gilt, bei Ungleichheit die Autorisierung abgelehnt wird.

**Claims**

1. A method for the identification of terminal users and for checking the authenticity of the origin and content of electronically transmitted data in on-line-networks using cryptographic methods, wherein a multiplicity of identification terminals (1) is connected to a central computer (2) by means of public or private line installations, each identification terminal containing a specifically assigned subsystem identification (SSID) and a specifically assigned cryptographic code, the so-called authenticity code (KAUT), in which system moreover, all admissible system users are provided with a personal identification number (PIN), and magnetic strip cards, which contain a specifically assigned user identification (ID), the personal identification number (PIN) standing in a functional relationship with the user identification (ID), in which system the transaction at the identification terminal (1) is, moreover, initiated by the system user by means of his magnetic strip card and his secret personal identification number (PIN), and a transaction request message (AP1) is created by the identification terminal and is protected by means of cryptographic methods and transmitted to the computer (2), whereupon the computer (2) transmits a transaction reply message (A1, A2, A3) protected by means of cryptographic methods to the identification terminal (1), and wherein the magnetic strip of the said magnetic strip card contains, apart from the data required for the handling of the transaction, a cryptographic code, the so called personal code (KP) and where the latter, like the personal identification number (PIN), stands in a functional relationship with the user identification (ID), the authenticity code (KAUT) standing in a functional relationship with the subsystem identification (SSID) and wherein provision is made for a hardware security module (3) for the computation of the said functions, wherein one code each (KPING) or (KPG) is stored in the module (3) for the reconstruction of the personal identification number (PIN) or of the personal code (KP) from the user identification (ID) and a code (KAUTG) for the reconstruction of the authenticity code (KAUT) from the subsystem identification (SSID), a reference authentification parameter (AP*) being formed from the reconstructed values and a comparison being effected between the transaction request message (AP1) and the reference authentification parameter (AP*) for the formation of authorisation parameters.

2. A method according to Claim 1, characterised in that the user identification (ID) carried on a transmission line (5, 8) is encoded with the codes (KPING, KPG) stored in a memory (6) or memory (9) and is transferred into the personal identification number (PIN) or into the personal code (KP), whereupon the user identification (ID) or a derivative thereof is connected to a further cryptographic circuit (12) which is also fed by a transmission line for the personal identification number (PIN) and the personal code (KP) and in that a transmission line (13) is connected via a further cryptographic circuit to the memory (14) for the authenticity code (KAUTG), by means of which the authenticity code (KAUT) is produced from the subsystem identification (SSID), wherewith there are created the reference authentification parameter (AP*) and the transaction reply message (A1, A2, A3) from the personal identification number (PIN), the personal code (KP), the authenticity code (KAUT) and further data of the transactions.

3. A method according to Claim 1 or 2, characterised in that

a) a transaction request message (AP1) is produced at the terminal (1) based on the data provided by the user, as well as the date, time, the serial number of the transaction and the subsystem identification,

b) the transaction request message (AP1) is encoded, the logical sum of the personal code (KP) and of the personal identification number (PIN) being used as the code,

c) the last 8-byte blocks of the result of (b) are encoded, the authenticity code (KAUT) of the terminal being used as the code,

d) that the result received in accordance with (c) is attached to the uncoded transaction request message (AP1) produced according to a) and that the data record being generated is transmitted to the computer (2),

e) the computer transmits the arriving data record to the connected hardware security module (3),

f) the hardware security module (3) collects the user identification (ID) from the data record and computes therefrom the personal code (KP) and the personal identification number (PIN),

g) the hardware security module (3) collects the subsystem identification (SSID) from the data record and computes therefrom the authenticity code (KAUT),

h) the hardware security module (3) encodes the transaction request message (AP1), the logical sum of the computed personal code (KP) and of the computed personal identification number (PIN) being used as the code,

i) the hardware security module (3) encodes the last 8-byte block of the result received in accordance with (h), the computed authenticity code (KAUT) being used as the code, and transmits the result to the computer (2) (= reference authentification parameter),

j) the hardware security module (3) decodes the last 8-byte block of the result received in accordance with (h), the computed authenticity code (KAUT) being used as the code, and transmits the result to the computer (2)

k) the computer (2) compares the reference authentification parameter (AP*) received from the hardware security module (3) with the last 8-bytes of the transaction request message (AP1) received, that if they are identical and if the remaining authorisation requirements defined by the application are met, the second input received from the security module is sent to the terminal as the transaction reply message (A1, A2, A3), that if they are not identical or if one of the authorisation requirements defined by the application is not met, a random number is sent to the terminal (1) as the transaction reply message,

l) the terminal (1) decodes the last 8-byte block of the result received in accordance with (b), the authenticity code (KAUT) being used as the code, and compares the result with the received transaction reply message (A1, A2, A3),

m) if they match, the transaction is held to be authorised, if they do not match, the authorisation is refused.

**Revendications**

1. Procédé pour l'identification d'utilisateurs de terminaux et pour la vérification de l'authenticité de l'origine et au contenu de données transmises de manière electronique dans des réseaux en ligne en utilisant des methodes cryptographiques, dans lequel une multiplicité de terminaux d'identification (1) sont raccordés à l'aide d'installations de lignes publiques ou privées à un ordinateur central (2), chaque terminal d'identification contenant une identification de sous-système (SSID) associée de manière univoque et un code cryptographique associé de manière univoque, appelé code d'authenticité (KAUT), dans lequel en outre tous les utilisateurs admissibles au système sont pourvus d'un numéro d'identification personnel (PIN) et de cartes à bande magnétique qui contiennent une identification d'utilisateur (ID) associée de manière univoque, le numéro d'identification personnel (PIN) étant en relation fonctionnelle avec l'identification d'utilisateur (ID), dans lequel par ailleurs la transaction sur le terminal d'identification (1) est initiée par l'utilisateur au système à l'aide de sa carte à bande magnétique et de son numéro d'identification personnel (PIN) secret et un message de demande de transaction (AP1) est formé par le terminal d'identification, protégé à l'aide de méthodes cryptographiques et transmis à l'ordinateur (2), suite à quoi l'ordinateur (2) transmet un message de réponse de transaction (A1, A2, A3), protégé par des méthodes cryptographiques, au terminal d'identification (1), et dans lequel la bande magnétique de la carte à bande magnétique contient en dehors des données necessaires pour le déroulement de la transaction un code cryptographique, appelé code personnel (KP) qui est, à l'instar au numéro d'identification personnel (PIN), en relation fonctionnel le avec l'identification d'utilisateur (ID), le code d'authenticité (KAUT) étant en relation fonctionnelle avec l'identification de sous-système (SSID), et pour le calcul des fonctions mentionnées est prévu un module de sécurité de matériel (3), un code (KPING) ou (KPG) pour la reconstruction du numéro d'identification personnel (PIN) et du code personnel (KP) à partir de l'identification d'utilisateur (ID) et un code (KAUTG) pour la reconstruction du code d'authenticité (KAUT) à partir de l'identification de sous-système (SSID) étant memorisés dans le module (3), un paramètre d'authentification de référence (AP*) étant formé à partir des grandeurs reconstruites et une comparaison entre le message de demande de transaction (AP1) et le paramètre d'authentification de référence (AP*) étant effectuée en vue de la formation de paramètres d'autorisation.

2. Procédé selon la revendication 1, caractérisé en ce que l'identification d'utilisateur (ID) effectuée sur une ligne de transmission (5, 8) est codée avec les codes (KPING, KPG) mémorisés dans une mémoire (6) ou mémoire (9) et introduite dans le numéro d'identificaiton personnel (PIN) et dans le code personnel (KP), suite à quoi l'identification d'utilisateur (ID) ou une derivée de celle-ci est reliée à un autre circuit de connexion (12) cryptographique auquel est raccordée également une ligne de transmission pour le numéro d'identification personnel (PIN) et le code personnel (KP), et qu'une ligne de transmission (13) est reliée par un autre circuit de connexion cryptographique à la mémoire (14) pour le code d'authenticité (KAUTG) avec lequel est produit à partir de l'identification de sous-système (SSID) le code d'authenticité (KAUT), un paramètre d'authentification de référence (AP*) et le message de réponse de transaction (A1, A2, A3) étant formés à partir du numéro d'identification (PIN), du code personnel (KP), du code d'authenticité (KAUT) et d'autres données des transactions.

3. Procédé selon la revendication 1 ou 2, caractérisé en ce

a) qu'un message de demande de transaction (AP1) est généré sur le terminal (1) sur la base des données fournies par l'utilisateur, ainsi que de la date, de l'heure, du numéro d'ordre de la transaction et de l'identification de sous-système,

b) que le message de demande de transaction (AP1) est codé, la somme logique du code personnel (KP) et du numéro d'identification personnel (PIN) servant de code,

c) que les derniers blocs 8-bytes du résultat de b) sont codés, le code d'authenticité (KAUT) du terminal servant de code,

d) qu'au message de demande de transaction (AP1) non codé genère suivant a) est accroché le résultat obtenu suivant c) et le paquet de données ainsi formé est transmis à l'ordinateur (2).

e) que l'ordinateur transmet le paquet de données, qui arrive, au module de sécurité de matériel (3) qui y est raccordé,

f) que le module de sécurité de matériel (3) extrait du paquet de données l'identification d'utilisateur (ID) et calculé à partir de celle-ci le code personnel (KP) et le numéro d'identification personnel (PIN),

g) que le module de sécurité de matériel (3) extrait du paquet de données l'identification de sous-système (SSID) et calculé à partir de celle-ci le code d'authenticité (KAUT),

h) que le module de securité de matériel (3) code le message de demande de transaction (AP1), la somme logique du code personnel (KP) calculé et du numéro d'identification personnel (PIN) calculé servant de code, i) que le module de sécurité de matériel (3) code le dernier bloc 8-bytes du résultat obtenu suivant h), le code d'authenticité (KAUT) calculé servant de code, et transmet le résultat à l'ordinateur (2) (= paramètre d'authentification de référence),

j) que le module de sécurité de matériel (3) décode le dernier bloc 8-bytes du résultat obtenu suivant h), le code d'authenticité (KAUT) calculé servant de code, et transmet le résultat à l'ordinateur (2),

k) que l'ordinateur (2) compare le paramètre d'authentification de référence (AP*) reçu du module de securité de matériel (3) avec les derniers 8-bytes du message de demande de transaction (AP1) reçu, et en cas de coïncidence et lorsque les autres exigences d'autorisation définies par l'application sont remplies, la deuxième valeur reçue du module de securité est envoyee en tant que message de réponse de transaction (A1, A2, A3) au terminal, alors qu'en cas de non-coïncidence ou lorsqu'une exigence d'autorisation définie par l'application n'est pas remplie, un chiffre aléatoire est transmis en tant que message de réponse de transaction au terminal (1),

l) que le terminal (1) décode le dernier bloc 8-bytes du résultat obtenu suivant b), le code d'authenticité (KAUT) servant de code, et compare le résultat avec le message de réponse de transaction (A1, A2, A3),

m) qu'en cas de coïncidence, la transaction est considerée comme autorisée, et qu'en cas de non-coïncidence, l'autorisation est refusée.

FIG. 1

FIG. 2

0 117 907